# EUROPEAN PATENT APPLICATION

(11) **EP 4 197 707 A1**
(43) Date of publication of application: **21.06.2023**
(21) Application number: 21214274.9
(22) Date of filing: 14.12.2021
(51) Int. Cl.: B25J 9/16, G05B 19/418

(54) **METHOD OF CONTROLLING THE OPERATION OF A PICK-AND-PLACE STATION OF A DISTRIBUTION SYSTEM, RELATED PICK-AND-PLACE STATION, DISTRIBUTION SYSTEM AND COMPUTER-PROGRAM PRODUCT**

(71) Applicant: Fameccanica.Data S.p.A., 66020 San Giovanni Teatino (CH) (IT)
(72) Inventor: CICCHITTI, Anselmo, 66020 San Giovanni Teatino (Chieti) (IT); DI DOMIZIO, Davide, 66020 San Giovanni Teatino (Chieti) (IT); IAVAZZO, Enrico, 66020 San Giovanni Teatino (Chieti) (IT); MANTINI, Valerio, 66020 San Giovanni Teatino (Chieti) (IT); SPIRITICCHIO, Maurizio, 66020 San Giovanni Teatino (Chieti) (IT); TATONE, Francesco, 66020 San Giovanni Teatino (Chieti) (IT)
(74) Representative: Marchitelli, Mauro

(57) **Abstract**

Solutions for controlling the operation of a pick-and-place station are disclosed. The pick-and-place station comprises a picking area (100) for receiving a pile of a plurality of objects (20) and a placing area (120) for providing separated objects (22). A sensor system (40, 420) monitors the picking area (100) and provides data identifying a set of geometrical features (F) for each object of a set of objects (20) in the picking area (100). A data processing system (42a) selects one of the objects in the set of objects (20) as a function of the set of geometrical features (F) of each object in said set of objects (20), and a robotized arm (30) performs a pick-and-place operation by picking the selected object (20) in the picking area (100) and placing the selected object in the placing area (120).

Specifically, during a data acquisition phase (1002), a dataset (430) is acquired by executing pick-and-place operations of a plurality of objects and generating data records by acquiring for each pick-and-place operation the set of geometrical features (F) of the respective object (20) and a respective execution time (E) of the pick-and-place operation and/or a respective result (R) indicating whether the pick-and-place operation was successful or unsuccessful. During a normal operating phase (1006), the data processing system (42a) receives from the sensor system (40, 420) the set of geometrical features (F) for each object in the set of objects (20), and estimates (4280; 1008) for each object in the set of objects (20) a respective expected execution time (E') and/or a respective expected result (R') as a function of the set of geometrical features (F) of the respective object and the data records of said dataset (430). Accordingly, the data processing system (42a) may select (4282; 1010) one of the objects in the set of objects (20) as a function of the expected execution time (E') and/or the expected result (R') of the objects in the set of objects (20).

## Description

### Technical field

Various embodiments of the present disclosure relate to solutions for controlling the operation of a pick-and-place station of a distribution system, such as a parcel distribution system.

### Background

Many distribution systems receive objects, such as parcels, in a disorganized stream that may be provided as individual parcels or parcels aggregated in groups. Each parcel must then be transported to the target destination, such as a container. Typically, the target destination is determined by reading a code applied to the object, such as a barcode or bidimensional code, such as a QR-code, which may be, *e.g.,* printed on the object/parcel or on a label/sticker applied to the object/parcel.

Recently have been proposed automated systems for receiving such objects in a disorganized manner and for providing separated objects via a conveyor. In fact, the separation of the stream in individual objects permits to scan the code applied to the object and manage the further transportation/distribution of the object within the distribution system to the target destination.

For example, United States Patent Application Publication No. US 2018/0127219 A1 discloses an automated parcel identification and sortation system comprising an infeed hopper into which objects may be dumped, *e.g.,* by a dumper or Gaylord. An infeed conveyor conveys objects from the infeed hopper to a conveyor. The infeed conveyor may include baffles or cleats for assisting in lifting the objects from the hopper onto a primary conveyor. Accordingly, the infeed conveyor with baffles is used to place the separated objects on the conveyor. A perception system may then survey the objects to identify objects and to determine good grasp points. In order to further separate and identify the objects, a robot arm with a gripper grips the objects and provides them to a further transport system, such as a further conveyor. For example, by dropping the object over the further transport system, a further perception system (such as a drop scanner) may be used to scan the code applied to the object. Finally, objects that cannot be grasped or are otherwise unacceptable continue along the primary conveyor and fall into exception bin or may be transported back to the infeed hopper.

Moreover, recently also robotic arms have been used to directly separate the objects/parcels. For example, in this context may be cited United States Patent Application Publication Nos. US 2017/0165717 A1 and US 2016/0243590 A1, which are incorporated herein by reference for this purpose.

For example, Figure 1 shows an example of a parcel separation system according to document US 2016/0243590 A1.

Specifically, the system comprises a belt conveyor 10 that is adapted to be loaded upstream with a pile of objects 20, such as parcels or postal articles, and to bring the pile of objects 20 under a vision system 40 equipped with one or more cameras. Once the pile of objects 20 is under the vision system 40, the belt conveyor 10 is stopped and thus the vision system 40 acquires digital images of the static pile of objects 20. A data-processing unit 42 is configured to elaborate the digital image(s) via image processing operations. The data-processing unit 42 implements also a monitoring and control unit for a robotized arm 30. Specifically, the unit 42 is programmed to identify/select a single object to be extracted from the pile of objects that is static. According to document US 2016/0243590 A1, the object to be extracted is the one that has a pickup face that is not covered by any other object in the pile of objects 20 and that is preferably facing in the direction going towards the top of the pile of articles. For example, the selected object may correspond to the object that is situated at the top of the pile of objects 20. Specifically, the unit 42 is programmed to act, by three-dimensional (3D) scene analysis, to compute various data items/features indicative of the three-dimensional position of the pickup face of each object with respect to the conveyor 10, such as the 3D position of the center of gravity of the pickup face, the facing direction of the pickup face, and the dimensions (length and width) of the pickup face.

Based on these data, the unit 42 controls the robotized arm 30, which is provided with a tool 32, such as pneumatic pickup head, so that it picks the selected object via the pickup face and places the selected object in a deposition zone, which, *e.g.,* is a predetermined location on a further conveyor 12. Accordingly, the visual system 40, the data-processing unit 42 and the robot 30 implement a pick-and-place station configured to pick a given selected object 20 from a picking area and place the respective object 20 in a placing area, such as the conveyor 12. Accordingly, in this way the conveyor 12 provides a stream of separated objects 22, which may then by further distributed, *e*.*g*., by reading a code applied to each separated object 22.

For example, possible solutions for reading such codes are disclosed, *e*.*g*., in European Patent Application No. EP 21207320.9, which is incorporated herein by reference for this purpose.

### Summary

The object of various embodiments of the present disclosure relates to solutions for improving the operation of such a pick-and-place station.

According to one or more embodiments, the above object is achieved via a method having the distinctive elements set forth specifically in the ensuing claims. The embodiments moreover regard a corresponding pick-and-place station, distribution system, as well as a corresponding computer-program product that can be loaded into the memory of at least one computer and comprises portions of software code for implementing the steps of the method when the product is run on a computer. As used herein, reference to such a computer-program product is intended as being equivalent to reference to a computer-readable medium containing instructions for controlling a computing system in order to co-ordinate execution of the method. Reference to "at least one computer" is intended to highlight the possibility of the present invention being implemented in a distributed/modular way.

The claims form an integral part of the technical teaching of the disclosure provided herein.

### Brief description of the drawings

The embodiments of the present disclosure will now be described with reference to the annexed drawings, which are provided purely by way of nonlimiting example and in which:
- Figure 1 shows an example of pick-and-place station;
- Figure 2 shows an embodiment of a distribution system comprising a pick-and-place station according to the present disclosure;
- Figure 3 shows an embodiment of a processing system used to select an object to be processed by the pick-and-place station of Figure 2; and
- Figures 4, 5 and 6 show embodiments of the operation of the processing system of Figure 3.

### Detailed description

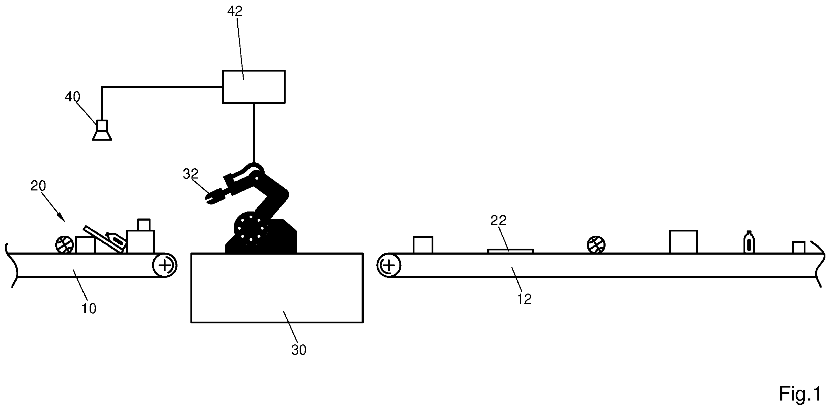

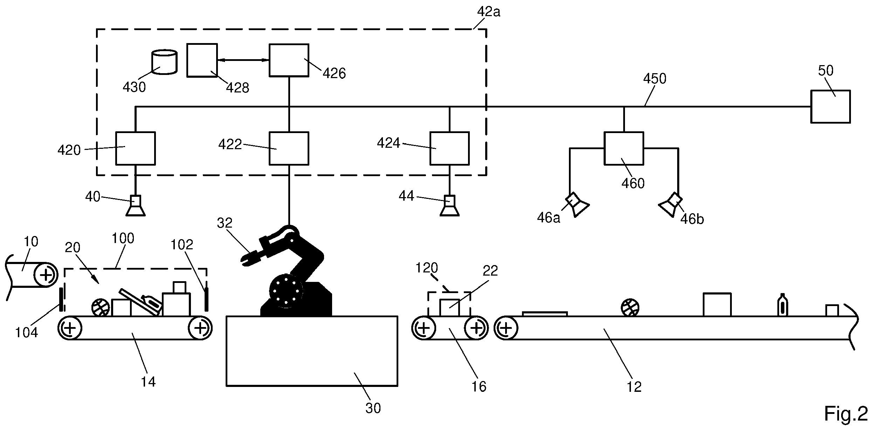

In the ensuing Figures 2 to 6, the parts, elements, or components that have already been described with reference to Figure 1 are designated by the same references used previously in the above figures. The aforesaid elements described previously will not be described again hereinafter in order not to overburden the present detailed description.

As mentioned before, the present description provides solutions for controlling the operation of pick-and-place station used to separate objects, such as parcels, in an automated distribution system.

Figure 2 shows an embodiment of a distribution system according to the present disclosure, such as a parcel handling system.

Generally, the distribution system of Figure 2 essentially is based on the system described with respect to Figure 1 and the respective description applies in its entirety.

Accordingly, also in this case, the distribution system comprises a picking area 100, in which may be disposed objects 20 in a disorganized manned, in particular a pile of objects 20. In various embodiments, the picking area 100 may also be enclosed at least partially, *e*.*g*., via one or more lateral side walls (not shown in Figure 2), and/or a front panel 102 and/or a rear panel 104.

Generally, the objects 20 may be brought in any suitable manner in the picking area 100. For example, in Figure 2 is shown a conveyor 10, such as a belt conveyor. However, also any other suitable conveyor system 10 may be used to transport the objects 20 in the picking area 100.

As shown in Figure 2, in various embodiments, the picking area 100 has associate at least one actuator 14 for moving the objects 20 in the picking area 100. For example, in the embodiment considered, the floor of the picking area 100 is implemented with a conveyor 14, such as a belt conveyor, which thus permits to move the objects 20 forward and/or backward. Accordingly, the conveyor 14 may also be used, at least in part, in order to bring the objects 20 in the picking area 100, *i.e.,* the conveyor 14 may be part of the conveyor system 10.

As will be described in the following, in various embodiments, the actuator(s) 14 may be used to shuffle/redistribute the objects 20 in the picking area 100. Accordingly, instead of using a conveyor, the actuators(s) 14 could also be implemented with other solutions, *e*.*g*., by one or more actuators configured to tilt the picking area 100, whereby objects 20 move due to gravity towards the front panel 102 and/or the rear panel 104. Generally, in case of a mere advancement of the objects 20 towards the front panel 102, the picking area 100 could also just have a static inclination.

In line with the previous description of document US 2017/0165717 A1, a pick-and-place station is configured to selectively move objects 20 from the picking area 100 to a placing area 120. For this purpose, the picking area 100 has associated a sensor system 40 arranged to generate data adapted to be used to generate a 3D model of the objects 20 in the picking area 100. For example, in various embodiments, the sensor system 40 comprises:
- one or more cameras 40, such as at least two cameras, configured to acquire images of the objects 20 in the picking area 100 from different angles; and/or
- a 3D scanner system, such as a LIDAR (Light Detection and Ranging) or radar system, configured to acquire a point cloud of a 3D scene.

In the embodiment considered, the data acquired by the sensor system 40 are provided to a data-processing system 42a. Generally, the data processing system 42a may comprise one or more data processing units, *e.g.,* each selected from the following list:
- an integrated circuit, such as an Application-Specific Integrated Circuit (ASIC) and/or a programmable integrated circuit, such as microcontroller, Digital Signal Processor (DSP) and/or Field-programmable gate array (FPGA),
- a Programmable Logic Controller (PLC),
- a general purpose computer, or
- a remote server.

Accordingly, in various embodiments, the data-processing system 42a may be implemented via software instructions executed by one or more microprocessors, and the operations may be implemented centralized or in a distributed manner, possibly also including one or more remote computers.

For example, in the embodiment considered, the data-processing system 42a comprises a data processing unit or software module 420 configured to process the data provided by the sensor system 40 in order to extract one or more features of the "visible" objects in the picking area 100. For example, only external objects 20 may be visible, while one or more objects may be fully covered by other objects, which may thus not be visible in the data provided by the sensor system 40.

For example, in various embodiments, the data-processing system 42a, *e.g.,* the unit or module 420 may be configured to determine the following features for one or more of the (visible) objects 20, which may be identified in the data provided by the sensor system 40:
- in case different types of objects 20 may be received, optional data identifying the type of the object, such as a parcel or packet;
- the 3D position of the object 20, such as cartesian coordinates of the object 20, *e.g.,* the coordinates of the center of gravity of the object 20, with respect to a reference coordinate, and data identifying an orientation/heading; and
- the dimension of the object, *e*.*g*., expressed in width, height and length.

In various embodiments, the data-processing system 42a is configured to process these features in order to select one of the objects 20, and to instruct a robotized arm 30 to move the selected object from the picking area 100 to the placing are 120. In various embodiments, the robotized arm 30 is thus configured to pick the selected object 20 via a suitable tool 32, such as a pneumatic pickup head and/or a gripper, and place the picked/selected object 20 in the placing area 120.

For example, in various embodiments, the placing area 120 corresponds to a conveyor 16, such as a belt conveyor, configured to provide the separated objects 22 to a further transportation and distribution system, as schematically shown via a further conveyor 12. In this respect, the inventors have observed that it is preferable to have a separate conveyor 16, because this permits to verify the correct placing of the object 22 prior to activating the conveyor 16 in order to forward the separated object 22 to the further transportation system 12, *i.e.,* the data-processing system 42a may be configured to stop the conveyor 16 during a pick-and-place operation of an object 20.

For example, in order to control the operation of the robotized arm 30 (and the respective tool 32), the data-processing system 42a may comprise a data processing unit or software module 422 configured to control the operation of the robotized arm 30.

In this respect, the control of the robotized arm 30 may also use data provided by the sensor system 40, *e.g.,* in order to determine whether the robotized arm 30 has correctly picked the selected object 20. Similar information may also be provided by the robotized arm 30, *i.e.,* the robotic arm 30 may also comprise one or more sensors configured to provide data, which permit to determine whether the robotized arm 30 has correctly picked the selected object 20. Additionally or alternatively, the data provided by the sensor system 40 may be used to determine the position of the tool 32 with respect to the selected object 20, thereby improving the picking operation.

Similarly, a sensor system 44, such as one or more cameras, may be associated with the placing area 120 in order to determine whether the robotized arm 30 has placed correctly the selected object in the placing area 120. For example, for this purpose, the data-processing system 42a may comprise a data processing unit or software module 424 configured to process the data provided by the sensor system 44 in order to determine whether the robotized arm 30 has placed an object in the placing are 120.

In various embodiments, the data-processing system 42a is configured to process the data provided by the sensor system 40, the robotized arm 30 and/or the sensor system 42 in order to determine data indicating the execution time of the pick-and-place operation, *i*.*e*., the time used to pick an object 20 in the picking area 100 and place the object in the placing are 120. For example, this time may correspond to execution time provided by the robotized arm 30 and/or determined by the unit or module 422. Alternatively, this time may be calculated based on data provided by the sensor system 40 and the sensor system 44, such as the time elapsed between a picking instant, *e*.*g*., detected by the sensor system 40 and/or determined by the unit or module 420, and a placing instant, *e*.*g*., detected by the sensor system 44 and/or determined by the unit or module 424.

Moreover, in various embodiments, the data-processing system 42a is configured to process the data provided by the sensor system 40, the robotized arm 30 and/or the sensor system 42 in order to determine data indicating whether the pick-and-place operation was successful, *i.e.,* whether the robotized arm 30 was able to pick the object 20 and place the object 20 in the placing are 120. For example, this information may be provided by one or more sensors associated with the tool 32 and/or determined by the unit or module 422. Alternatively, this information may be determined, *e*.*g*., via the unit or module 420 by processing the sensor data provided by the sensor system 40 in order to determine whether the picking of the object 20 was successful and/or via the unit or module 424 by processing the sensor data provided by the sensor system 44 in order to determine whether the placing of the object 20 was successful.

In various embodiments, the data-processing system 42a is configured to process the above data provided by the sensor system 40, the robotized arm 30 and/or the sensor system 42 in order to determine data indicating whether the object 20 was correctly picked but lost during the pick-and-place operation, because the object 20 was not correctly placed in the placing area 120.

In various embodiments, when determining that the pick-and-place operation was unsuccessful because the object 20 was not correctly picked, the data-processing system 42a may thus instruct the robotized arm 30, *e.g.,* via the unit or module 422, to repeat the pick-and-place operation for the same object. In this case, the data-processing system 42a may also determine data indicating the number of pick-and-place operations required to correctly place the selected object 20 in the placing area 120.

Conversely, when determining that the pick-and-place operation was unsuccessful because the object 20 was lost, the data-processing system 42a may instruct the robotized arm 30, *e.g.,* via the unit or module 422, to pick-and-place a different object 20. Generally, when determining that the pick-and-place operation was unsuccessful for any reason, the data-processing system 42a may also always select a different object 20.

Generally, the data-processing system 42a may process the data provided by the sensor system 44 in order to determine whether a plurality of objects 20 have been placed in the placing area 120, which may also be classified as an unsuccessful pick-and-place operation.

Accordingly, in various embodiments, the data-processing system 42a may comprise a processing unit 420 configured to process the data provided by the sensor system 40, a processing unit 422 configured to process the data provided by and/or control the operation of the robotized arm 30, a processing unit 424 configured to process the data provided by the sensor system 44, and a processing system 426 configured to control the pick-and-place operation, *e*.*g*., provide instructions to the processing unit 422 based on the data provided by the processing units 420, 422 and/or 424. For example, in various embodiments, the processing unit 426 is a PLC connected to the processing units 420, 422 and 424 via a Fieldbus, *e*.*g*., according to IEC 61784/61158, or any other communication system 450, such as a CAN bus or Ethernet.

In various embodiments, the data-processing system 42a may also be configured to request new objects 20 to be provided to the placing area 120 and/or drive the actuator(s) 14 in order to shuffle the objects 20 in the placing area.

As schematically shown in Figure 2, in various embodiments, the distribution system may comprise a further sensor system 46, *e*.*g*., comprising a one or more cameras 46a and 46b, configured to detect the code applied to the object 20. For example, for this purpose the sensor system 46 may have associated a further processing unit 460 or software module of the data-processing system 42a configured to determine the code associated with each separated object 22 by processing the data, *e*.*g*., images, provided by the sensor system 46. Generally, the sensor system 46 may also be configured to monitor directly the object 22 in the placing area 120, *e.g.,* on the conveyor 16. Accordingly, in various embodiments, the sensor systems 44 and 46 may also be combined.

Finally, as well known in the art, the code may be provided to a controller 50 configured to control the operation of other components of the distribution system in order to track the separated objects 22 and move/transport the separated objects 22 to respective target locations as a function of the respective code. For example, for this purpose, the processing unit 460 and the controller 50 may be connected to the communication system 450.

In this respect, various embodiments of the present disclosure relate to the operations performed by the data-processing system 42a, *e.g.,* the processing unit 426, in order to improve the efficiency of the pick-and-place operations. For example, in various embodiments, the data-processing system 42a comprises for this purpose a processing unit or software module 428 configured to process the data provided by the sensor systems 40 and/or 44, and/or the robotized arm 30, in order to select an object 20 to be picked and placed by the robotized arm 30.

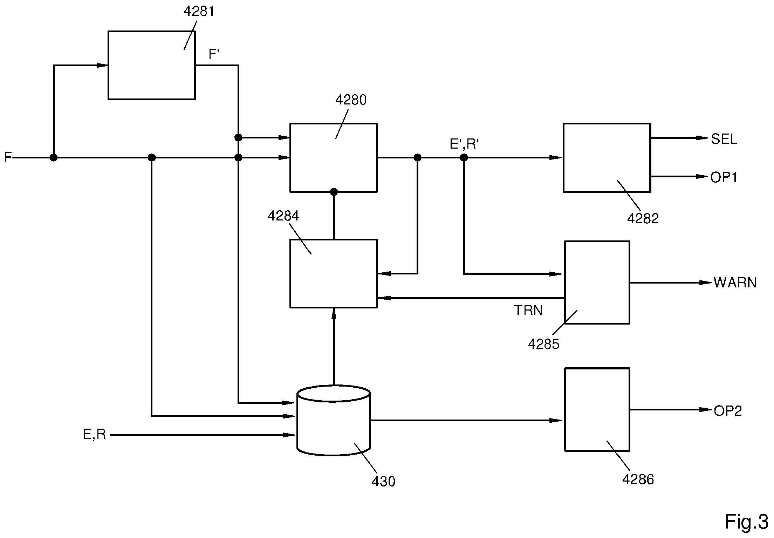

Figure 3 shows an embodiment of the operation of the data-processing system 42a, *e.g.,* the processing unit or software module 428.

As mentioned before, in various embodiments, the data-processing system 42a is configured to receive from the sensor system 40 and/or the unit or module 420 a given set of object features F for each object 20 of a set of objects in the picking area 100, *e*.*g*., comprising n features f₁, f₂, ... fₙ. As mentioned before, the set of objects may correspond to the "visible" objects in the picking area 100. In various embodiments, the set of objects just consists in the objects 20, which are not covered by any other object 20, *e.g.,* the objects on top of the pile of objects 20.

For example, in various embodiments, the set of features F includes the previously mentioned 3D position of the object 20 and the dimension of the object 20. In various embodiments, the set of features F may also include orientation information, such as heading and/or tilt data *(e.g.,* angles) of the object 20, and/or complementary orientation information, such as one or more (estimated) angles to be used by the robotized arm 30 and/or the tool 32 in order to pick the object 20. In various embodiments, the features F may also include data identifying the type of the object 20.

In various embodiments, the data-processing system 42a is configured to process the features F via an estimation module/algorithm 4280 in order to predict an expected execution time E' and/or an expected success rate R' for a pick-and-place operation of the respective object based on the set of object features F.

For this purpose, the data-processing system 42a may thus perform various pick-and-place operations and acquire for each pick-and-place operation of a respective object 20 the respective set of features F, and the respective execution time E and/or result R of the pick-and-place operation, such as 1 in case of a successful pick-and-place operation and 0 in case of a unsuccessful pick-and-place operation, *e*.*g*., due to an error in the picking operation or because the picked object 20 is lost prior to the placing operation. Generally, the result may also be encoded in any other suitable manned. However, as will be described in the following, by using a first numerical value for a successful pick-and-place operation and a second numerical value for an unsuccessful pick-and-place operation, theses numerical value may be used to determine a value indicating average/mean value of the success or failure rate of the pick-and-place operation.

For example, these data may be stored to a database 430, *e.g.,* in the form of data records, wherein each data record comprise a given set of features F and the respective execution time E and/or result R.

Accordingly, in various embodiments, the estimation module 4280 may use a statistical algorithm. For example, the module 4280 may be configured to receive a set of features F of a given object 20 (not yet picked), and use the data stored to the database 430 in order to calculate an expected execution time E' and/or an expected success rate R'. For example, for this purpose, the module 4280 may search in the database 430 all data records having similar features, such as a similar 3D position and dimension of the object 20, and obtain the respective execution time E and/or result R stored for each data record. Next, the unit or module 4280 may calculate an expected execution time E' and/or expected result R' via a statistical analysis, *e*.*g*., by calculating a mean value, of the obtained execution times E or results R, respectively. In various embodiments, the module 4280 may also calculate a weighted mean, *e.g.,* by decreasing the weights for values being older.

For example, in various embodiments, the unit or module 4280 is configured to select as similar data records the data records where:
- the 3D position (*e*.*g.*, coordinates and heading) stored to the data record is within a given range with respect to the 3D position indicated by the features F; and
- the dimension stored to the data record is within a given range with respect to the dimension indicated by the features F.

Conversely, in other embodiments, the data-processing system 42a may discretize via a (pre-processing) module 4281 the value of each feature fi in the set of n features F in a respective discretized value fᵢ.

For this purpose, the module 481 may obtain for each feature fi a respective value range (between a respective minimum f_{i,min} and a respective maximum value fi,max). Generally, the value range of each feature fi may be fixed or programmable, or the data-processing system 42a may automatically determine the value range of a feature fi by analyzing the respective values of the feature fi stored to the database 430. In various embodiments, the module 4281 may then discretize the value range of each feature fi in a respective set of M intervals, *e*.*g*., equal in size. Generally, the number of intervals M and/or the size of each interval may be fixed or programmable.

Alternatively, in various embodiments, the module 4281 may automatically determine the intervals of a feature fi via a clustering algorithm, such as K-means or K-nearest neighbor. For example, in this case, the data-processing system 42a may determine the number M of intervals/clusters via a Calinski-Harabasz algorithm. Clustering algorithms are *per se* well known in the art, and for this purpose may be cited, *e.g.,* the article Zeev Volkovich, et al., "Self-learning K-means clustering: A global optimization approach", June 2013, Journal of Global Optimization 56, DOI: 10.1007/s10898-012-9854-y, which is incorporated herein by reference for this purpose.

Accordingly, in various embodiments, the data-processing system 42a may determine for one or more feature fi of the set of n feature F of a given object a respective value range m of the respective M value ranges, thereby generating a set F' of mapped features fᵢ.

Accordingly, the module 4280 may obtain the set of mapped feature F' both for the current set of feature F and for the data records stored to the database 430. For example, for this purpose, the data-processing system 42a may be configured to directly store the set of mapped features F' with the respective data record to the database 430 (in addition to or as alternative to the set of features F) or by determining the respective set of mapped features F' for the set of features F stored as data records to the database 430.

Accordingly, in this case, the module 4280 may select as similar data records the data-records belonging to the same set of mapped features F' as the set of mapped features F' provided by the module 4281 for the current set of features F. Accordingly, the unit or module 4280 may calculate an expected execution time E' and/or expected result R' via a statistical analysis, *e*.*g*., by calculating a mean or weighted mean value of the execution times E or results R, respectively, obtained for the data records with the same set of mapped features F'.

Generally, instead of using a statistical analysis, the module 4280 may use a machine learning algorithm, such as an artificial neural network or a Support Vector Machine, wherein the statistical analysis is replaced with one or more parametrized mathematical functions configured to estimate the expected execution time E' and/or expected result R' as a function of the features F and/or the mapped features F'. For example, in various embodiments, instead of using the set of features F, the module 4280 may use the set of mapped features F'.

Accordingly, in order to adjust the parameters of the parametrized mathematical function, the unit or module 428 may also use a training module/algorithm 4284 configured to vary the parameters of the parametrized mathematical function of the module 4280 as a function of the data stored to the database 430, which essentially represents in this case a training dataset. Specifically, in various embodiments, the training module 4284 is configured to adjust the parameters (*e*.*g.*, via an iterative training algorithm) in order to minimize for the features F and/or F' of the training dataset the difference between the output of the parametrized mathematical function, *i.e.,* the expected execution time E' and/or expected result R', with respect to the actual values E and/or R stored for the respective data records.

Accordingly, in the embodiments considered, the data-processing system 42a, *e.g.,* the estimation module 4280, is configured to determine for each object 20 in the subset of objects a respective expected execution time E' and/or expected result R'. Accordingly, the unit or module 428 may then generate via a selection module 4282 a selection signal SEL indicating a given object 20 selected amongst the set of objects 20 as a function of the expected execution time E' and/or expected result R', *i.e.,* the data-processing system 42a may then instruct the robotized arm 30, *e.g.,* via the unit or module 422, to pick-and-place the object 20 indicated by the selection signal SEL.

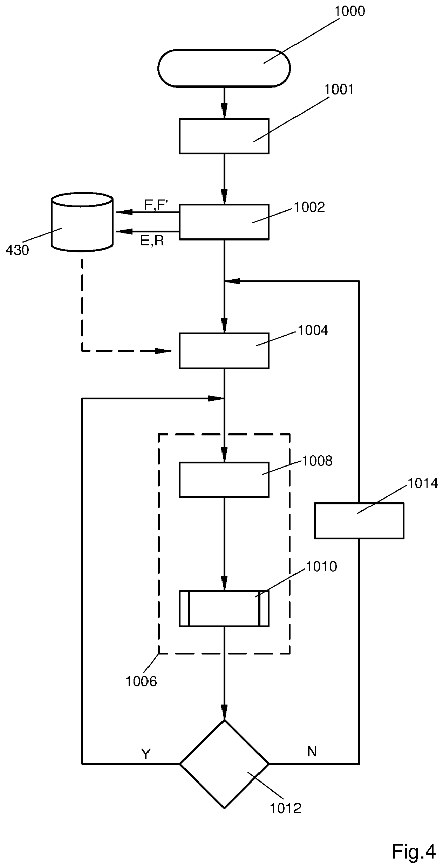

The respective operation of the data-processing system 42a, *e.g.,* the unit or module 428, is also summarized in the flowchart of Figure 4.

Specifically, after a start step 1000, the data-processing system 42a monitors, in a learning step/phase 1001, a plurality of pick-and-place operations executed by the pick-and-place station. Preferably, the pick-and-place operations are performed under different conditions. For instance, for this purpose the data processing system 42a may acquire via the sensor system 40 the data of a subset of objects 20 in the picking area 100, such as objects 20 not covered by other objects, and then selects randomly one of the objects in the subset. Next, the data-processing system 42a instructs the unit or module 422 or directly the robotized arm 30 to perform the pick-and-place operation of the selected object 20. Once having executed the pick-and-place operation of the selected object 20, the data-processing system 42a may thus acquire the respective execution time E and/or result R of the pick-and-place operation.

Consequently, the data acquired in the step 1001, *i.e.,* the set of features F and the execution time E and/or result R, represent the reference dataset for a statistical estimation method or the training dataset for a machine learning method (estimation module 4280 in Figure 3). Accordingly, as described in the foregoing, the data-processing system 42a may store these data at a step 1002 to the database 430. Generally, as described with respect to the pre-processing module 4281, the data-processing system 42a may also map at the step 1002 one or more of the features F to respective mapped features F'.

In case of machine learning method, the data-processing system 42a may then adapt at a step 1004 via a suitable training module 4284 the parameterized mathematical function of the estimation module 4280 using the features F (and/or one or more of the respective mapped features F'), and the execution time E and/or result R, of the pick-and place operations executed at the step 1002. In general, the mathematical function of the estimation module 4280 may be represented by various kinds of supervised-machine-learning algorithms, such as artificial neural networks or support vector machines.

The pick-and-place station may then be used during a normal operating mode 1006, where the data-processing system 42a should select the objects 20 to be picked and placed.

Specifically, in a step 1008, the data-processing system 42a obtains the features F (or one or more of the respective mapped features) for the set of obj ects 20 in the picking area 100 and estimates the expected execution time E' and/or the expected result R', *e.g.,* via the module 4280, which implements a statistical analysis of the dataset stored to the database 430 and/or via the "trained" parameterized mathematical function. Next, the data-processing system 42a selects in a step 1010, *e.g.,* via the selection module 4282, the object 20 to be picked and placed by the robotized arm 30.

In various embodiments, the data-processing system 42a may be configured to acquire the features F (or one or more of the respective mapped features F'), and the respective execution time E and/or result R of each pick-and-place operation also during the normal operation mode 1006 and store (at least a subset of) these data to database 430, thereby updating the reference dataset for a statistical analysis or the training dataset for a machine learning algorithm.

In this respect, the inventors have observed that the actual execution time E, and/or the success or failure rate R may vary over time, *e.g.,* due to varying operating conditions of the robotized arm 30, such as a degradation of components of the robotized arm 30 (the performance is decreasing), or a maintenance and/or repair operation of the robotized arm 30 (the performance is increased).

Accordingly, as shown in Figure 3, in various embodiments, the data-processing system 42a, *e.g.,* the unit or module 428, may comprise a trend-analysis module 4285. Specifically, in various embodiments, this module 4285 is configured to obtain the past values of the execution time E for the data records of the database 430 having similar object features F. For example, in case of a statistical analysis within the estimation module 4280, already the module 4280 may be configured to determine data records in the database 430 being similar to the current set of features F, *e.g.,* by using tolerance ranges and/or by using the set of mapped features F'. According, the trend analysis module 4285 may use the same data records, or *(e.g.,* in case the estimation module 4280 implements a machine learning) may implement the previously described operations in order to select similar data records.

Accordingly, in various embodiments, the data-processing system 42a, *e.g.,* the trend analysis module 4285, is configured to analyze via a trend analysis, such as a linear or exponential trend analysis, the past values or a given number of past values of the execution time E of data-records having similar features F *(e.g.,* having the same mapped features F') in order to determine a trend of the past values of the execution time E.

For example, in various embodiments, the data-processing system 42a is configured to determine the trend via a moving average filter, such as a weighted moving average filter, applied to the absolute value of the execution times E or differences D between the past values of the execution times E. For example, assuming that the trend analysis module 4285 considers (n+1) past execution times E(t-1), E(t-2), ... E(t-n+1), in various embodiments, the data-processing system 42a is configured to calculate n differences D(t-1), D(t-2), ... D(t-n) between each couple of consecutive execution times E, *e.g.,* D(t-1) = E(t-1) - E(t-2). Next, the module 4286 may calculate an index I by calculating a weighted sum of these differenced D, *i.e.,* I = a₁ D(t-1) ... + aₙ D(t-2). Specifically, in various embodiments the weights a₁, ... aₙ may decrease for the differences D being older, *e*.*g*., according to an exponential law, thereby weighting stronger the recent differences/variations D of the execution time E.

Accordingly, in various embodiments, the data-processing system 42a may compare in a step 1012 the trend/index I with one or more thresholds, thereby determining whether the execution time E has an (undesired) positive and/or negative drift. For example, as mentioned before, a positive drift of the execution time E may indicate that one or more components of the robotized arm 30 are subject to wear, while a negative drift of the execution time E may indicate that a maintenance and/or repair operation of the robotized arm 30 has been performed. In addition to or as an alternative to the execution time E, the trend analysis module 4285 may also perform a trend analysis of the success or failure rate R.

Accordingly, in various embodiments, in case the trend/index I is greater than a threshold (output "N" of the verification step 1012), the data-processing system 42a may proceed to a step 1014, where the trend-analysis module 4285 generates a warning signal WARN, which may alert an operator that the performance of the robotized arm 30 is decreasing, as also schematically shown in Figure 3. For example, the warning signal WARN may be displayed on a monitoring computer of the distribution system and/or used to generate an electronic message, such as a SMS and/or an e-mail and/or a notification within a dedicated monitoring app installed on a portable electronic device, such as a smartphone.

Moreover, a positive or negative drift of the data may imply that the estimation module 4280 may not estimate correctly the expected execution time E' and/or result R'. In case of statistical analysis this effect may be reduced by considering only a given number of past values and/or using a weighted mean in order to estimate the expected execution time E' and/or result R', thereby neglecting or at least considering less older data records. Conversely, in case of a machine learning, a new training operation may be required.

Accordingly, in various embodiments, in case the module 4280 implements a machine learning, the data-processing system 42a may proceed from the step 1014 to the training step 1004, as also schematically shown in Figure 3, where the trend analysis module 4285 generates a signal TRN provided to the training module 4284. Conversely, in case the module 4280 implements a statistical analysis, the data-processing system 42a may proceed from the step 1014 to the normal operating phase 1006. Generally, such a training may be implemented as an alternative to the warning signal WARN or may use also other threshold values. For example, in various embodiments, in case the trend/index I is greater than a first threshold and smaller than a second threshold, the data-processing system 42a may return to the step 1004.

Conversely, in case the trend/index I is smaller than the threshold, within the first and second thresholds or simply because the trend analysis is omitted (output "Y" of the verification step 1012), the data-processing system 42a may return to the step 1006 for performing the next pick-and-place operation.

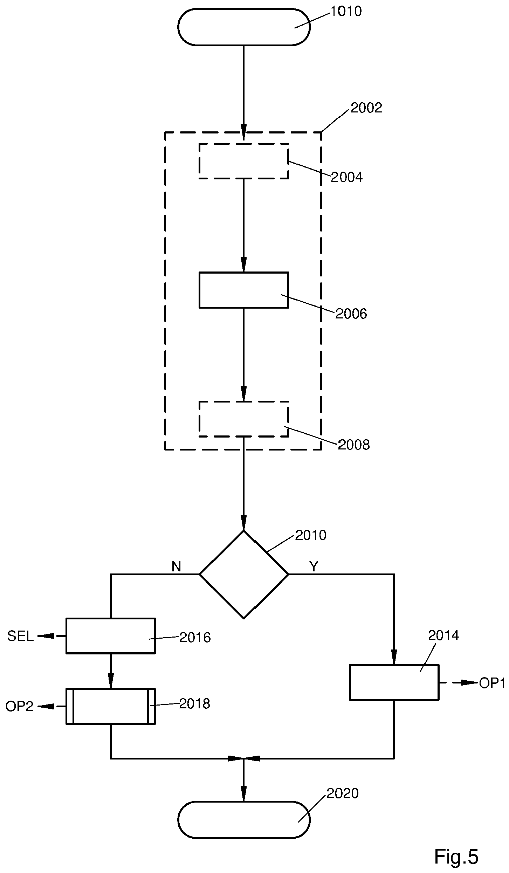

Figure 5 shows an embodiment of the selection operation performed by the data-processing system 42a, as implemented, *e*.*g*., in the selection module 4282.

Generally, once the selection procedure 1010 is started, the selection module 4282 receives in a step 2002 the estimated execution time E' and/or the estimated result R' for one or more objects 20 in the place area 100.

In various embodiments, the selection module 4282 removes at the step 2002 objects, which likely result in an unsuccessful and/or inefficient pick-and-place operation.

For example, when using 1 for successful pick-and-place operations and 0 for unsuccessful pick-and-place operations, the expected result R' indicates a success rate. In this respect, by using an opposite value assignment, *i.e.,* 1 for unsuccessful for pick-and-place operations, the result R' would indicate a failure rate. In general, due to the statistical analysis or the machine learning algorithm, the expected result R' indicates thus an expected probability of success.

Accordingly, in various embodiments, the selection module 4282 is configured to compare in a step 2006 the estimated probability of success (as indicated by the expected result R') with a threshold R_{TH} and remove the objects 20 having an estimated probability of success being smaller than the threshold R_{TH}. For example, in various embodiments, the threshold R_{TH} may be selected in a range between 0.80 and 0.99, preferably, between 0.85 and 0.95, *e.g.,* 0.9. For example, in this way, the selection module 4282 may maintain the objects having a high success rate for the pick-and-place operation.

Similarly, in various embodiments, the selection module 4282 is configured to compare in a step 2008 the estimated execution time E' with a threshold E_{TH} and remove the objects 20 having an estimated execution time E' being greater than the threshold E_{TH}. For example, in this way, the selection module may maintain the objects having a short execution time for the pick-and-place operation.

Accordingly, in various embodiments, the set of remaining objects is verified at a step 2010. Specifically, in case the set of remaining objects is empty (output "Y" of the verification step 2010), the selection module 4282 may proceed to a step 2014, where the selection module 4282 generates one or more signals OP1 (see also Figure 3) in order to indicate that the objects 20 in the picking area 100 may not be handled (efficiently) by the robotized arm 30. For example, the signal OP1 may indicate that new objects 20 have to be provided to the picking area 100, *e.g.,* by driving the conveyor 10, and/or the objects 20 in the picking area 100 should be mixed/shuffled, *e*.*g*., by driving the actuator(s) 14. Next, the selection procedure may terminate at a stop step 2020, and the procedure may be started again when the next set of objects should be analyzed. Generally, *e.g.,* in case no further objects 20 have to be provided to the picking area 100 and only few objects 20 are remaining in the picking area 100, the signal OP1 may also be used to activate the conveyor 14 or another actuator in order to move the remaining objects 20 from the picking area 100 to an exception bin for a manual handling by an operator.

Conversely, in case the set of remaining objects is not empty (output "N" of the verification step 2010), the selection module may proceed to a step 2016, where the selection module 4282 selects one of the remain objects 20. For example, in various embodiments, the selection module 4282 may perform one of the following operations:
- select the object 20 with the highest probability of success (as indicated by the expected result R');
- select the object 20 with the shortest expected execution time E'; or
- calculate a cost function, such as a weighted sum, based on the expected result R' *(e.g.,* converted in a failure rate) and execution time E', and select the objects having the best value of the cost function, *i.e.,* the highest or lowest value based on whether the cost function should be minimized or maximized.

Accordingly, in various embodiments, the data-processing system 42a may set the signal SEL to a value indicating the object 20 to be picked-and-placed by the robotized arm 30.

In Figure 5 is also shown a further step 2004 prior to the step 2006. Specifically, in various embodiments, the tool 32 of the robotized arm 30 may indeed comprise a plurality of different tools and/or different configurations for the same tool. For example, in line with the disclosure of US 2016/0243590 A1, the configuration and/or the number of the suction cups of a pneumatic pickup head 32 may be varied.

For example, this implies that robotized arm 30 may be instructed to pick a given object with different operating modes. Accordingly, in various embodiments, the data-processing system 42a may store to the database 430 also data indicating a given operating mode having been used for the respective data record. Accordingly, in this case, the data-processing system 42a may perform at the step 1002 different pick-and-place operations not only for different objects, but also by using different operating modes.

Accordingly, in this case, the data-processing system 42a may not only estimate a single expected result R' and/or execution time E' for a given object, but may estimate for each of a plurality of operating modes a respective expected result R' and/or execution time E' for the given object 20. For example, in this case, the selection module may select at the step 2004 one of the operations for the given object 20. In general, any of the methods described in the foregoing may also be used to remove inefficient operations, such as selecting the operation with the highest probability of success (as indicated by the expected result R') or calculating a cost function based on the expected result R' and the execution time E'.

Moreover, Figure 3 shows a module 4286, and similarly Figure 5 shows a step 2018. Generally, even though this step 2018 is shown after the step 2016, this step is preferably executed in parallel with the pick-and-place operation executed in response to the selection performed in the step 2016.

Specifically, as shown in Figure 3, the module 4286 may be configured to obtain the expected execution time E' and/or the expected result R' for the set of (visible) objects in the picking area 100.

Specifically, while the module 4282 is configured to filter the list of objects 20 and select (if possible) a single object 20 to be picked-and-placed by the pick-and-place station, the module 4286 is configured to determine whether one or more further objects 20 in the picking area 100 may be likely processed at the next pick-and-place cycle, *i.e.,* once the selected object has been processed.

Specifically, as shown in Figure 3, similar to the step 2014, the step 2018/module 4286 may be configured to generate one or more signals OP2. For example, the signal OP2 may indicate that:
- new objects 20 should be provided to the picking area 100, *e.g.,* by driving the conveyor 10, and/or
- the objects 20 in the picking area 100 should be mixed/shuffled, *e*.*g*., by driving the actuator(s) 14;

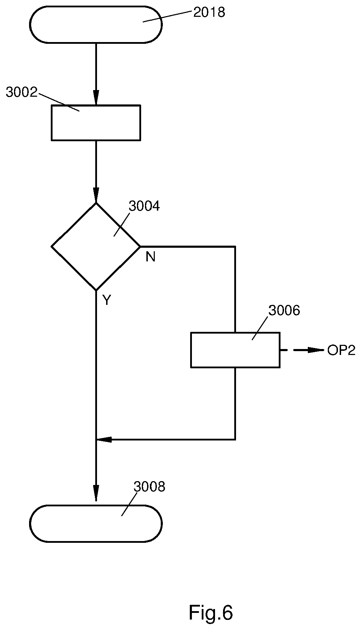

Specifically, Figure 6 shows a possible embodiment of the operation of the module 4286/the step 2018.

Specifically, once the step 2018 is started, the data-processing system 42a, in particular the module 4862, is configured to obtain in a step 3002 the set of remaining objects generated via the step 2002 of Figure 5 and verify whether this set comprises at least two objects 20.

Substantially, in this way, the data-processing system 42a may determine in a step 3004 whether at least one further object may be processed, once the current selected object has been processed.

For example, in case the set of remaining objects consists in only a single object 20 (output "N" of the verification step 3004), *i.e.,* contains only a single remaining object 20, which is accordingly selected by the module 4282, the data-processing system 42a may proceed to a step 3006, where the data-processing system 42a generates the one or more signal OP2. Next the procedure may terminate at a stop step 3008.

Conversely, in case the set of remaining objects comprises a plurality of objects 20 (output "Y" of the verification step 3004), the procedure may directly terminate at the stop step 3008.

In various embodiments, instead of using the set of remaining objects generated by the module 4282, the module 4286 is configured to generate at the step 3002 a separate filtered set of objects similar to the operations performed at the step 2002 of Figure 5. For example, similar to the steps 2006 and 2008, the module 4282 may be configured to generate a set of remaining objects by:
- comparing the estimated probability of success (as indicated by the expected result R') with a threshold R_{TH2} and removing the objects 20 having an estimated probability of success being smaller than the threshold R_{TH2}; and/or
- comparing the estimated execution time E' with a threshold E_{TH2} and removing the objects 20 having an estimated execution time E' being greater than the threshold E_{TH2}.

For example, in this way, the module 4286 may use a threshold R_{TH2} being greater than the threshold R_{TH} used by the module 4282, *i.e.,* the module 4286 may verify whether a plurality of objects may be placed with a high probability of success, even though the selection module 4282 may indeed select an object with a lower probability of success. Similarly, the module 4286 may use a threshold E_{TH2} being smaller than the threshold E_{TH} used by the module 4282, *i.e.,* the module 4286 may verify whether a plurality of objects may be placed with a short execution time, even though the selection module 4282 may indeed select an object with a higher execution time. In fact, while the module 4282 selects the object to be processed in the current pick-and-place cycle, the module 4282 determined whether a further object 20 may be processed efficiently also in the next pick-and-place cycle, and possibly generates the signal(s) OP2 in order to try to increase the efficiency of the next pick-and-place operation.

Accordingly, in the embodiment considered, the module 4286 is configured to determine (implicitly or explicitly) whether the respective filtered set of objects comprises at least one object being different from the object selected by the module 4282.

Accordingly, in various embodiments, the data-processing system 42a is able to execute operations in parallel to the pick-and-place operation, in particular once the object 20 has been picked by the robotized arm 30, in order to increase the probability of successful and/or reduce the execution time of one or more following pick-and-place operations.

Those of skill in the art will appreciate that the specific selection at the step 2016/module 4282, the operation of at the step 2018/module 4286 and/or the trend analysis at the step 1012/module 4285 may be used separately or in combination.

For example, even though the trend analysis module 4285 is preferably used to signal that the estimation module should be updated, *e.g.,* via the signal TRN, the trend analysis module 4285 could also just be used to analyses the data records of the database 430 in order to generate a warning signal WARN indicating a degradation of the performance of the robotized arm 30.

Similarly, even though the modules 4282 and 4285 use both the expected execution time E' and/or result R', these modules may also operate independently. In fact, while the step 2002 has been described mainly in the context of the step 2016, the same result may also just be used by the step 2018 (as described also with respect to the step 3002). For example, similar to document US 2016/0243590 A1, the selection module 4282 could also not consider at all the expected execution time E' and/or the expected result R', but could just select the object 20 at the top of the pile of objects 20 that has a pickup face that is not covered by any other object in the pile of objects 20 and that is preferably facing in the direction going towards the top of the pile of objects 20.

Accordingly, generally the present disclosure relates to a method of controlling the operation of a pick-and-place station, and a respective pick-and-place station, wherein the pick-and-place station comprises a picking area 100 for receiving a pile of a plurality of objects 20 and a placing area 120 for providing separated objects 22. A sensor system 40, 420 is configured to monitor the picking area 100 and provide data identifying a set of geometrical features F for each object of a set of objects 20 in the picking area 100. A data processing system 42a is configured to select one of the objects in the set of objects 20 as a function of the set of geometrical features F of each object in the set of objects 20. A robotized arm 30 is configured to perform a pick-and-place operation by picking the selected object 20 in the picking area 100 and placing the selected/picked object in the placing area 120.

Specifically, as described in the foregoing, the data processing system 42a acquires a dataset 430 during a data acquisition phase 1002 by executing pick-and-place operations of a plurality of objects and generating data records by acquiring for each pick-and-place operation the set of geometrical features F of the respective object 20 and a respective execution time E of the pick-and-place operation and/or a respective result R indicating whether the pick-and-place operation was successful or unsuccessful.

According to a first aspect of the present disclosure, the data processing system 42a receives during a normal operating phase 1006 from the sensor system 40, 420 the set of geometrical features F for each object in the set of objects 20 currently determined for the picking area 100, and estimates via the estimation module 4280/step 1008 for each object in the set of objects 20 a respective expected execution time E' and/or a respective expected result R' as a function of the set of geometrical features F of the respective object and the data records of the dataset, *e.g.,* by using a statistical analysis or a machine learning algorithm.

Specifically, concerning the operation of the selection module 4282, in various embodiments, the data processing system 42a selects one of the objects in the set of objects 20 as a function of the expected execution time E' and/or the expected result R' of the objects in the set of objects 20.

Conversely, concerning the operation of the module 4286, in various embodiments, the data processing system 42a generates via the steps 2002 and/or 3002 a filtered set of objects 20 by removing the objects from the set of objects 20 when the respective expected result R' indicates that a probability of success of a respective pick-and-place operation is smaller than a first threshold, and/or when the respective expected execution time E' is greater than a second threshold. Next, the data processing system 42a verifies whether the filtered set of objects comprises at least one object being different from the selected object, *i.e.,* the object actually selected by the module 4282, thereby determining whether a next object may be selected. Accordingly, in response to determining that the filtered set of objects does not comprise an object 20 being different from the selected object, the data processing system 42a may generate a signal OP2 used to request, once the robotized arm 30 has picked the selected object 20 and while said robotized arm 30 is moving to the placing area 120, that new objects are provided to the picking area 100 and/or the objects 20 in said picking area 100 are shuffled.

According to a second aspect of the present disclosure, the data processing system 42a receives a given set of geometrical features F, *e.g.,* of each of the objects in the subset of objects or of the selected object, and identifies in the dataset 430 a subset of data records having a set of geometrical features F being similar to the received set of geometrical features F. Next, the data processing system 42a acquires the execution times E and/or the results R of said subset of data records, and estimates a first trend of the acquired execution times E and/or a second trend of the acquired results R. Accordingly, the data processing system 42a may verify whether the first trend indicates that the execution time E increases more than a given first threshold and/or the second trend indicates that the probability of success decreases more than a given second threshold. Accordingly, in response to determining that the first trend indicates that the execution time (E) increases more than a given first threshold and/or the second trend indicates that the probability of success decreases more than a given second threshold, the data processing system 42a may generate a warning signal WARN, and optionally the training signal TRN.

Of course, without prejudice to the principles underlying the invention, the details of construction and the embodiments may vary widely with respect to what has been described and illustrated herein purely to way of example, without thereby departing from the scope of the present invention, as defined by the ensuing claims.

## Claims

1. A method of controlling the operation of a pick-and-place station, wherein the pick-and-place station comprises:
- a picking area (100) for receiving a pile of a plurality of objects (20) and a placing area (120) for providing separated objects (22);
- a sensor system (40, 420) configured to monitor said picking area (100) and provide data identifying a set of geometrical features (F) for each object of a set of objects (20) in said picking area (100);
- a data processing system (42a) configured to select one of the objects in said set of objects (20) as a function of said set of geometrical features (F) of each object in said set of objects (20); and
- a robotized arm (30) configured to perform a pick-and-place operation by picking said selected object (20) in said picking area (100) and placing said selected object in said placing area (120);
wherein the method comprises the steps of:
- during a data acquisition phase (1002), acquiring a dataset (430) by executing pick-and-place operations of a plurality of objects and generating data records by acquiring for each pick-and-place operation the set of geometrical features (F) of the respective object (20) and a respective execution time (E) of the pick-and-place operation and/or a respective result (R) indicating whether the pick-and-place operation was successful or unsuccessful,
- during a normal operating phase (1006):
- receiving from said sensor system (40, 420) said set of geometrical features (F) for each object in the set of objects (20),
- estimating (4280; 1008) for each object in said set of objects (20) a respective expected execution time (E') and/or a respective expected result (R') as a function of the set of geometrical features (F) of the respective object and the data records of said dataset (430), and
- selecting (4282; 1010) one of the objects in said set of objects (20) as a function of the expected execution time (E') and/or the expected result (R') of the objects in said set of objects (20).

2. The method according to Claim 1, wherein said set of geometrical features (F) of an object (20) comprises the 3D position of the object (20) and the dimension of said object (20).

3. The method according to Claim 2, wherein said estimating (4280; 1008) for each object in said set of objects (20) a respective expected execution time (E') and/or a respective expected result (R') comprises executing the following steps for each object in said set of objects (20):
- identifying in said dataset (430) a subset of data records having a set of geometrical features (F) being similar to the set of geometrical features (F) of the object, and
- estimating the expected execution time (E') and/or the expected result (R') via a statistical analysis of the execution times (E) and/or the results (R) of said subset of data records, respectively.

4. The method according to Claim 3, wherein said identifying in said dataset (430) a subset of data records having a set of geometrical features (F) being similar to the set of geometrical features (F) of the object comprises:
- identifying data records wherein the 3D position and/or the dimension stored to the data record is similar to the 3D position and/or the dimension of the object (20).

5. The method according to Claim 1 or Claim 2, wherein said estimating (4280; 1008) for each object in said set of objects (20) a respective expected execution time (E') and/or a respective expected result (R') comprises:
- providing a parametrized mathematical function (4280) configured to estimate the expected execution time (E') and/or the expected result (R') as a function of the set of geometrical features (F) of an object (20),
- during a training phase (1004), adjusting the parameters of said parametrized mathematical function (4280) as a function of said data records of said dataset, and
- during said normal operating phase (1006), estimating (4280; 1008) for each object in said set of objects (20) the respective expected execution time (E') and/or the respective expected result (R') via said parametrized mathematical function (4280).

6. The method according to any of the previous claims, wherein said selecting (4282; 1010) one of the objects in said set of objects (20) as a function of the expected execution time (E') and/or the expected result (R') of the objects in said set of objects (20) comprises generating (2002) a filtered set of objects (20) by:
- removing (2006) objects from said set of objects (20) when said expected result (R') indicates that a probability of success of a respective pick-and-place operation is smaller than a first threshold, and/or
- removing (2008) objects from said set of objects (20) when said expected execution time (E') is greater than a second threshold.

7. The method according to Claim 6, comprising:
- verifying (2010) whether said filtered set of objects (20) is empty, and
- in response to determining that said filtered set of objects (20) is not empty, selecting (2016) one of the objects in said filtered set of objects (20) by:
- selecting the object (20) where the respective expected result (R') indicates the highest probability of success,
- selecting the object (20) with the shortest expected execution time (E'), or
- calculating for each object (20) a cost function as a function of the respective expected execution time (E') and the respective expected result (R'), and selecting the objects having the best value of the cost function.

8. The method according to Claim 6 or Claim 7, comprising:
- verifying (3002) whether said filtered set of objects comprises at least one object being different from said selected object, thereby determining whether a next object may be selected, and
- in response to determining that said filtered set of objects does not comprise an object (20) being different from said selected object, generating (3008) a signal (OP2) used to request, once said robotized arm (30) has picked said selected object (20) and while said robotized arm (30) is moving to said placing area (120), that new objects are provided to said picking area (100) and/or the objects (20) in said picking area (100) are shuffled.

9. The method according to Claim 7 or Claim 8, comprising:
- in response to determining that said filtered set of objects (20) is empty, generating a signal (OP1) used to request that new objects are provided to said picking area (100) and/or the objects (20) in said picking area (100) are shuffled.

10. The method according to any of the previous claims, wherein said robotized arm (30) supports a plurality of operating modes for picking an object (20), and the method comprises the steps of:
- during said data acquisition phase (1002), executing pick-and-place operations of a plurality of objects with different operating modes of said robotized arm (30) and generating said data records by acquiring also the respective mode of operation, and
- during said normal operating phase (1006):
- estimating (4280; 1008) for each object in said set of objects (20) and for each operating mode a respective expected execution time (E') and/or a respective expected result (R') as a function of the set of geometrical features (F) of the respective object and the data records of said dataset (430), and
- selecting (4282; 1010) one of the operating modes for each object in said set of objects (20) as a function of the expected execution time (E') and/or the expected result (R') for the same object (20) with different operating modes.

11. The method according to any of the previous claims, wherein said sensor system (40, 420) comprises:
- a plurality of cameras configured to acquire images of the objects (20) in said picking area (100) from different angles; and/or
- a 3D scanner system, such as a Light Detection and Ranging and/or radar system, configured to acquire a point cloud of said picking area (100).

12. The method according to any of the previous claims, wherein said picking area (100) has associated an actuator (14) configured to selectively shuffle the objects (20) in said picking area (100).

13. A pick-and-place station comprising:
- a picking area (100) for receiving a pile of a plurality of objects (20) and a placing area (120) for providing separated objects (22);
- a sensor system (40, 420) configured to monitor said picking area (100) and provide data identifying a set of geometrical features (F) for each object of a set of objects (20) in said picking area (100);
- a data processing system (42a) configured to select one of the objects in said set of objects (20) as a function of said set of geometrical features (F) of each object in said set of objects (20); and
- a robotized arm (30) configured to perform a pick-and-place operation by picking said selected object (20) in said picking area (100) and placing said selected object in said placing area (120);
wherein said data processing system (42a) is configured to implement the steps of the method according to any of the previous claims.

14. A distribution system, such as a parcel distribution system, comprising:
- a pick-and-place station according to Claim 13;
- a sensor system (46) configured to detect a code applied to said separated objects (22); and
- a transportation system (12; 50) configured to transport each separated objects (22) to a respective target location as a function of the respective code.

15. A computer-program product that can be loaded into the memory of at least one processor and comprises portions of software code for implementing the steps of the method according to any one of Claims 1 to 12.
